# EUROPÄISCHE PATENTANMELDUNG

(11) **EP 4 502 740 A1**
(43) Veröffentlichungstag der Anmeldung: **05.02.2025**
(21) Anmeldenummer: 23188710.0
(22) Anmeldetag: 31.07.2023
(51) Int. Cl.: G05B 19/042, G05B 9/03, G05B 23/02

(54) **SCHALTUNGSANORDNUNG FÜR EINE STEUERUNG EINER MASCHINE, MASCHINENSYSTEM, VERFAHREN ZUM ERZEUGEN EINES STEUERSIGNALS FÜR EIN MASCHINENSYSTEM, COMPUTERPROGRAMMPRODUKT, SOWIE COMPUTERLESBARES SPEICHERMEDIUM**

(71) Anmelder: Siemens Aktiengesellschaft, 80333 München (DE)
(72) Erfinder: Fröhlich, Joachim, 85614 Kirchseeon (DE); Rothbauer, Stefan, 86156 Augsburg (DE); Stückjürgen, Christoph, 80807 München (DE); Zeller, Marc, 81243 München (DE)
(74) Vertreter: Siemens Patent Attorneys

(57) **Zusammenfassung**

Die Erfindung betrifft eine Schaltungsanordnung (16), mit einer ersten elektronischen Recheneinrichtung (18) zum Erzeugen von einem ersten Steuersignal (20), wobei die erste elektronische Recheneinrichtung (18) einen internen ersten Datensensor (22) zum Erzeugen eines ersten Sicherheitssignals (26) für eine Sicherheitseinrichtung (14) aufweist, wobei die Schaltungsanordnung (16) eine zweite elektronische Recheneinrichtung (28) aufweist, welche zum Erzeugen von einem zweiten Steuersignal (30) ausgebildet ist, wobei die zweite elektronische Recheneinrichtung (28) einen internen zweiten Datensensor (32) zum Erzeugen eines zweiten Sicherheitssignals (36) aufweist, wobei die erste elektronische Recheneinrichtung (18) einen externen zweiten Datensensor (38) aufweist, welcher mit dem internen zweiten Datensensor (32) gekoppelt ist, wobei die zweite elektronische Recheneinrichtung (28) einen externen ersten Datensensor (40) aufweist, welcher mit dem internen ersten Datensensor (22) gekoppelt ist, und wobei ein jeweiliges Sicherheitssignal (26, 36) zusätzlich von dem externen ersten Datensensor (40) und/oder dem externen zweiten Datensensor (38) erzeugbar ist.

## Beschreibung

Die Erfindung betrifft eine Schaltungsanordnung für eine Steuerung einer Maschine, mit zumindest einer ersten elektronischen Recheneinrichtung zum Erzeugen von einem ersten Steuersignal für die Maschine, wobei die erste elektronische Recheneinrichtung einen internen ersten Datensensor zum Erzeugen eines ersten Sicherheitssignals für eine Sicherheitseinrichtung der Maschine aufweist. Ferner betrifft die Erfindung ein Maschinensystem mit zumindest einer Schaltungsanordnung, ein Verfahren zum Erzeugen eines Steuersignals für ein entsprechendes Maschinensystem, ein Computerprogrammprodukt sowie ein computerlesbares Speichermedium.

Um sicherheitskritische Automatisierungsaufgaben auszuführen, die eine kontinuierliche Überwachung und Steuerung erfordern, muss eine Automatisierungssoftware zuverlässig ausgeführt werden. Es muss jederzeit gewährleistet sein, dass in einem Fehlerfall ein sicherer Systemzustand erreicht werden kann, zum Beispiel ein Notstopp einer Maschine oder ein Wiederanlaufpunkt ohne Unterbrechung des gesteuerten Prozesses. Auch wird zu diesem Zweck in der Regel dedizierte Hardware, zum Beispiel ein ausfallsicheres SPS, und Software für fehlertolerante Systeme verwendet. Aus Sicherheitsgründen können sicherheitskritische Automatisierungsaufgaben im Stand der Technik nicht auf handelsüblicher Standardhardware ausgeführt werden.

Aufgabe der vorliegenden Erfindung ist es, eine Schaltungsanordnung, ein Maschinensystem, ein Verfahren, ein Computerprogrammprodukt sowie ein computerlesbares Speichermedium zu schaffen, mittels derer sicherheitskritische Funktionen auf Standardhardware ausgeführt werden können.

Diese Aufgabe wird durch eine Schaltungsanordnung, ein Maschinensystem, ein Verfahren, ein Computerprogrammprodukt sowie ein computerlesbares Speichermedium gemäß den unabhängigen Patentansprüchen gelöst. Vorteilhafte Ausgestaltungsformen sind in den Unteransprüchen angegeben.

Ein Aspekt der Erfindung betrifft eine Schaltungsanordnung für eine Steuerung einer Maschine, mit zumindest einer ersten elektronischen Recheneinrichtung zum Erzeugen von einem ersten Steuersignal für die Maschine, wobei die erste elektronische Recheneinrichtung einen internen ersten Datensensor zum Erzeugen eines ersten Sicherheitssignals für eine Sicherheitseinrichtung der Maschine aufweist.

Es ist dabei vorgesehen, dass die Schaltungsanordnung eine zweite elektronische Recheneinrichtung aufweist, welche zum Erzeugen von einem zweiten Steuersignal für die Maschine ausgebildet ist, wobei die zweite elektronische Recheneinrichtung einen internen zweiten Datensensor zum Erzeugen eines zweiten Sicherheitssignals für die Sicherheitseinrichtung aufweist, wobei die erste elektronische Recheneinrichtung einen externen zweiten Datensensor aufweist, welcher mit dem internen zweiten Datensensor gekoppelt ist, wobei die zweite elektronische Recheneinrichtung einen externen ersten Datensensor aufweist, welcher mit dem internen ersten Datensensor gekoppelt ist, und wobei ein jeweiliges Sicherheitssignal zusätzlich von dem externen ersten Datensensor und/oder dem externen zweiten Datensensor erzeugbar ist.

Somit ist es ermöglicht, dass sicherheitsrelevante Steuerungsfunktionen auch auf handelsüblicher Standardhardware (COTS - Components-off-the-shelf), insbesondere Standard Industrie Hardware, ausgeführt werden können.

Insbesondere ermöglicht somit die Schaltungsanordnung die Nutzung hochverfügbarer und/oder sicherheitskritischer Steuerungssysteme. Eine Besonderheit dieses Ansatzes ist es dabei, dass keine dedizierte Spezialhardware für eine ausfallsichere SPS benötigt wird (Speicherprogrammierbare Steuerung). Vielmehr können erfindungsgemäß Standard-Industrie-PCs als elektronische Recheneinrichtung für die Ausführung sicherheitsrelevanter Steuerungsfunktionen verwendet werden, die entsprechend aufgerüstet werden, ohne dass die Steuerungsfunktion, geschweige denn das enthaltene Steuerungssystem, angehalten werden muss.

Zu diesem Zweck wird beispielsweise eine Steuerfunktion von zwei, insbesondere analogen, Steuerfunktionsinstanzen, die auf jeweiligen Rechenknoten/elektronische Recheneinrichtungen eingesetzt und ausgeführt werden, eingesetzt und ausgeführt. Da es sich um zwei Instanzen einer Steuerfunktion handelt, verhalten sich die beiden elektronischen Recheneinrichtungen identisch, wenn alles andere unverändert bleibt.

Für die Implementierung der Rechenknoten beziehungsweise der elektronischen Recheneinrichtung können zwei vergleichsweise günstige Standard-Industrie-PCs mit handelsüblicher Hardware und Software verwendet werden. Die externen Datensensoren sind mit den internen Datensensoren und insbesondere auch mit den entsprechenden elektronischen Recheneinrichtungen verschränkt. Diese Datensensoren bilden das Rückgrat des verteilten Sicherheitsüberwachungssystems mit zwei redundanten Sicherheitsverbindungen zur Steuerung der Sicherheitseinrichtung. Die Schaltungsanordnung erkennt und behandelt ausfallende oder fehlerhafte Prozesse, Prozesskommunikationsverbindungen und Rechenknoten.

Die Schaltungsanordnung ist dabei insbesondere voll funktionsfähig, um den Lebenszyklus der sicherheitsrelevanten Steuerungsinstanz vollständig abzudecken, einschließlich von Upgrades und Downgrades der Steuerungsfunktion mit internen Datensensoren und der externen Datensensoren. Im Normalfall überdauert die Schaltungsanordnung die Steuerfunktionsinstanzen, das heißt die Schaltungsanordnung vor und nach den Steuerfunktionsinstanzen ist bevorzugt weiterhin betriebsbereit.

Insbesondere ist somit vorgesehen, dass sicherheitsrelevante Steuerungsfunktionen durch die Ausführung mittels hochverfügbarer preiswerter Hardware, zum Beispiel industrieller Standardhardware, statt auf dedizierter, vergleichsweise teurer Hardware, wie zum Beispiel einer ausfallsicheren SPS, durchgeführt werden können. Ferner sind die SPS schwer zu erhalten, wodurch eine schnellere Bereitstellung der Schaltungsanordnung realisiert werden kann. Die redundanten externen Datensensoren, die in getrennten Prozessen auf redundanter industrieller Standardhardware laufen, die sich von der Hardware unterscheidet, auf der die überwachte, sicherheitsrelevante Steuerungsfunktion läuft, implementieren somit ein unabhängiges Netz auf kosteneffizienter Weise. Ferner ermöglicht die Schaltungsanordnung ein nahtloses Upgrade von hochverfügbaren, sicherheitsrelevanten Steuerungsfunktionen auf industrieller Standardhardware.

Gemäß einer vorteilhaften Ausgestaltungsform sind der erste externe Datensensor und der zweite externe Datensensor über eine Kommunikationsverbindung miteinander gekoppelt. Insbesondere können somit die externen Datensensoren ihre Systemsichten vergleichen und Systeminkonsistenzen oder Komponentenausfälle durch ausfallende Datensensoren und/oder ausfallenden Kommunikationsverbindungen erkennen. Im Falle eines drohenden Schadens, wenn beispielsweise die primäre Steuerungsfunktion der ersten elektronischen Recheneinrichtung nicht ordnungsgemäß reagiert, kann die Schaltungsanordnung auf die zweite elektronische Recheneinrichtung umschalten, so dass im Fehlerfall immer die Sicherheitseinrichtung / der Notaus angesteuert werden kann von einer korrekten, integren Teil der Schaltungsanordnung. Somit kann ein sicherer Betrieb der Maschine realisiert werden.

Ferner hat es sich als vorteilhaft erwiesen, wenn die erste elektronische Recheneinrichtung und die zweite elektronische Recheneinrichtung über eine weitere Kommunikationsverbindung miteinander gekoppelt sind. Insbesondere können somit die elektronischen Recheneinrichtungen beispielsweise ihre Steuerfunktionen miteinander koordinieren. Somit kann ein zuverlässiger Betrieb der Maschine realisiert werden.

Ferner hat es sich als vorteilhaft erwiesen, wenn die erste elektronische Recheneinrichtung als primäre Steuerungseinrichtung für die Maschine ausgebildet ist. Insbesondere ist somit eine entsprechende Kommunikation zwischen der ersten elektronischen Recheneinrichtung und der Maschine aktiv. Eine Verbindung zwischen der zweiten elektronischen Recheneinrichtung und der Maschine kann als inaktiv betrachtet werden. Insbesondere ist somit vorgesehen, dass die Steuerung der Maschine über die erste elektronische Recheneinrichtung durchgeführt wird. Die Schaltungsanordnung ist dazu ausgebildet, sollte beispielsweise ein Fehlerfall in der ersten elektronischen Recheneinrichtung zu verzeichnen sein, dass dann wiederum die Verbindung zwischen der ersten elektronischen Recheneinrichtung und der Maschine inaktiv geschaltet wird und die Steuerungsfunktion über die zweite elektronische Recheneinrichtung durchgeführt wird. Insbesondere kann somit ein redundantes System / redundant ausgelegtes System für die Maschine geschaffen werden zur sicheren Erkennung und Beherrschung von Fehlern und, in manchen Fällen, zur Erhöhung / Verlängerung ihrer Verfügbarkeit.

In einer weiteren vorteilhaften Ausgestaltungsform ist vorgesehen, dass der interne erste Datensensor mit dem externen zweiten Datensensor gekoppelt ist und/oder der interne zweite Datensensor mit dem externen ersten Datensensor gekoppelt ist. Somit können auch die internen und externen Datensensoren einer jeweiligen elektronischen Recheneinrichtung miteinander kommunizieren.

Eine weitere vorteilhafte Ausgestaltungsform sieht vor, dass der interne erste Datensensor zum Überwachen des Betriebs der ersten elektronischen Recheneinrichtung ausgebildet ist und/oder der interne zweite Datensensor zum Überwachen des Betriebs der zweiten elektronischen Recheneinrichtung ausgebildet ist. Insbesondere sind somit die internen Datensensoren zur Überwachung des Betriebs der Steuerfunktionsinstanzen, insbesondere der elektronischen Recheneinrichtungen, ausgebildet, indem sie beispielsweise Datenelemente, die sich auf die Steuerfunktionsinstanzen oder ihre Betriebsmittel beziehen, überwachen und von Fall zu Fall ändern. Der interne erste Datensensor überwacht dabei (to monitor) die erste Steuerungsfunktion, den Datensensor selbst (self-monitoring) und die erste elektronische Recheneinrichtung aus Sicht der ersten Steuerungsfunktion. Dadurch kann zuverlässig eine Überwachung der elektronischen Recheneinrichtung und eine Ausfallsicherheit realisiert werden.

Es hat sich weiterhin als vorteilhaft erwiesen, wenn der externe zweite Datensensor zum Überwachen des Betriebs der ersten elektronischen Recheneinrichtung ausgebildet ist und/oder der externe erste Datensensor zum Überwachen des Betriebs der zweiten elektronischen Recheneinrichtung ausgebildet ist. Insbesondere überwachen somit die externen Datensensoren die Steuerungsfunktionen der jeweils anderen elektronischen Recheneinrichtung. Dies kann insbesondere über die Kommunikation mit den entsprechenden internen Datensensoren erfolgen, wobei hierbei insbesondere die entsprechenden Kommunikationsverbindungen genutzt werden. Die externen Datensensoren überwachen somit die jeweils andere Steuerinstanz über die internen Datensensoren unter Verwendung der entsprechenden Kommunikationsverbindungen.

Ferner hat es sich als vorteilhaft erwiesen, wenn die Datensensoren zum Durchführen eines Testprogramms für die erste elektronische Recheneinrichtung und/oder die zweite elektronische Recheneinrichtung ausgebildet sind. Insbesondere können somit die internen Datensensoren ein entsprechendes Testprogramm implementieren. Testprogramme, die interne Datensensoren oder externe Datensensoren steuern, nutzen dabei insbesondere sogenannte Untersuchungspunkte (probe points). Das sind Daten in speziell gekapselten Variablen

Ebenfalls können auch die externen Datensensoren entsprechende Testprogramme implementieren, jedoch insbesondere dedizierten, unabhängigen Überwachungsprozessen auf verschiedenen Rechenknoten. Auf Basis der Testprogramme kann somit überprüft werden, ob die entsprechenden Recheninstanzen noch funktionsfähig sind. Insbesondere ist dabei vorgesehen, dass die Testprogramme kontinuierlich während des Betriebs durchgeführt werden, sodass ein hohes Maß an Sicherheit für den Betrieb der Maschine realisiert werden kann.

Ein weiterer Aspekt der Erfindung betrifft ein Maschinensystem mit zumindest einer Maschine, einer Sicherheitseinrichtung und einer Schaltungsanordnung zum Steuern der Maschine nach dem vorhergehenden Aspekt.

Ein nochmals weiterer Aspekt der Erfindung betrifft ein Verfahren zum Erzeugen eines Steuersignals für ein Maschinensystem nach dem vorhergehenden Aspekt. Es wird eine Fehlfunktion der ersten elektronischen Recheneinrichtung mittels zumindest einem der Datensensoren erfasst. Es erfolgt das Erzeugen eines Steuersignals für die Maschine mittels der zweiten elektronischen Recheneinrichtung oder ein Initiieren einer Notsteuerung der Maschine mittels der Sicherheitseinrichtung.

Beispielsweise kann vorgesehen sein, dass bei einem Feststellen der Fehlfunktion der ersten elektronischen Recheneinrichtung ein Steuersignal derart erzeugt wird, dass der Betrieb mittels der zweiten elektronischen Recheneinrichtung weitergeführt werden kann. Alternativ oder ergänzend kann beispielsweise ein Steuersignal in einer Art Notbetrieb initiiert werden, beispielsweise ein Notstopp der Maschine eingeleitet werden oder ein Betrieb mit reduzierter Leistung der Maschine. Somit kann mittels hochverfügbarer Hardware entsprechende sicherheitskritische Funktionen der Maschine dennoch weiterhin durchgeführt werden.

In einer vorteilhaften Ausgestaltungsform des Verfahrens ist vorgesehen, dass die Notsteuerung von dem internen ersten Datensensor oder dem externen ersten Datensensor oder dem internen zweiten Datensensor oder dem externen zweiten Datensensor initiiert wird. Insbesondere können somit Notsteuerungssignale von jedem der Datensensoren, welche beispielsweise eine Fehlfunktion feststellen, initiiert werden. Dadurch können hochfunktionell sicherheitskritische Funktionen auf der Maschine durchgeführt werden.

Es hat sich weiterhin als vorteilhaft erwiesen, wenn mittels des internen ersten Datensensors und/oder des externen ersten Datensensors und/oder des internen zweiten Datensensors und/oder des externen zweiten Datensensors ein Testprogramm, insbesondere kontinuierlich, an die erste elektronische Recheneinrichtung und/oder die zweite elektronische Recheneinrichtung übertragen werden. Zwischen den vier Datensensoren, unter einer Steuerung von Testprogrammen, werden kontinuierlich Testdaten übertragen, entweder Beobachtungsdaten oder Daten / Kommandos zur Teststeuerung. Somit ist es ermöglicht, dass während des Betriebs kontinuierlich eine Überwachung der ersten elektronischen Recheneinrichtung und der zweiten elektronischen Recheneinrichtung durchgeführt werden kann. Dies hat den Vorteil, dass Fehlfunktionen der ersten elektronischen Recheneinrichtung oder der zweiten elektronischen Recheneinrichtung sofort erkannt werden können und beispielsweise ein Notbetrieb der Maschine initiiert werden kann. Somit können sicherheitsrelevante Funktionen der Maschine auf einfache Art und Weise durchgeführt werden.

Es hat sich weiterhin als vorteilhaft erwiesen, wenn die erste elektronische Recheneinrichtung und die zweite elektronische Recheneinrichtung für einen redundanten Betrieb der Maschine bereitgestellt werden. Insbesondere können beispielsweise die erste elektronische Recheneinrichtung und die zweite elektronische Recheneinrichtung im Wesentlichen baugleich ausgebildet sein. Somit kann ein redundantes System geschaffen werden, welches auf einfache Art und Weise und dennoch zuverlässig den Betrieb der Maschine durchführen kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche zumindest eine elektronische Recheneinrichtung dazu veranlassen, wenn die Programmcodemittel von der zumindest einen elektronischen Recheneinrichtung abgearbeitet werden, ein Verfahren nach dem vorhergehenden Aspekt durchzuführen.

Ferner betrifft die Erfindung auch ein computerlesbares Speichermedium mit zumindest einem Computerprogrammprodukt nach dem vorhergehenden Aspekt.

Insbesondere ist zumindest die Schaltungsanordnung und/oder das Maschinensystem dazu ausgebildet, die entsprechenden Verfahrensschritte durchzuführen. Insbesondere werden die Verfahrensschritte mittels der Schaltungsanordnung beziehungsweise des Maschinensystems durchgeführt.

Die Schaltungsanordnung sowie das Maschinensystem weisen insbesondere gegenständliche Merkmale auf, um entsprechende Verfahrensschritte durchführen zu können.

Vorteilhafte Ausgestaltungsformen der Schaltungsanordnung sind als vorteilhafte Ausgestaltungsformen des Maschinensystems, des Verfahrens, des Computerprogrammprodukts sowie des computerlesbaren Speichermediums anzusehen.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: ein schematisches Blockschaltbild gemäß einer Ausführungsform eines Maschinensystems mit einer Ausführungsform einer Schaltungsanordnung; und
- FIG 2: ein weiteres schematisches Blockschaltbild eines Maschinensystems mit einer Ausführungsform einer Schaltungsanordnung.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

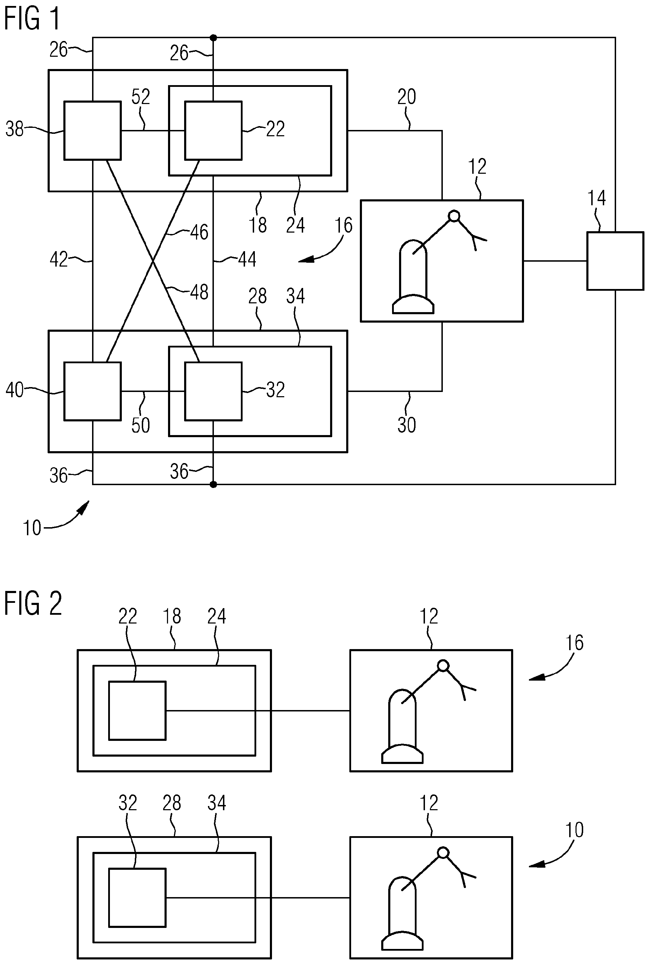

FIG 1 zeigt ein schematisches Blockschaltbild einer Ausführungsform eines Maschinensystems 10. Das Maschinensystem 10 weist zumindest eine Maschine 12, eine Sicherheitseinrichtung 14 sowie eine Schaltungsanordnung 16 auf.

Die Schaltungsanordnung 16 ist für eine Steuerung der Maschine 12 ausgebildet. Die Schaltungsanordnung 16 weist zumindest eine erste elektronische Recheneinrichtung 18 zum Erzeugen von einem ersten Steuersignal 20 für die Maschine 12 auf. Die erste elektronische Recheneinrichtung 18 weist einen internen ersten Datensensor 22, insbesondere für eine erste Steuerfunktion 24 zum Erzeugen des Steuersignals 20, auf. Ferner ist der erste interne Datensensor 22 zum Erzeugen eines ersten Sicherheitssignals 26 für die Sicherheitseinrichtung 14 ausgebildet.

Es ist vorgesehen, dass die Schaltungsanordnung 16 eine zweite elektronische Recheneinrichtung 28 aufweist, welche zum Erzeugen von einem zweiten Steuersignal 30 für die Maschine 12 ausgebildet ist, wobei die zweite elektronische Recheneinrichtung 28 einen internen zweiten Datensensor 32, insbesondere für eine zweite Steuerfunktion 34, und zum Erzeugen eines zweiten Sicherheitssignals 36 für die Sicherheitseinrichtung 14 aufweist, wobei die erste elektronische Recheneinrichtung 18 einen externen zweiten Datensensor 38 aufweist, welcher mit dem internen zweiten Datensensor 32 gekoppelt ist und wobei die zweite elektronische Recheneinrichtung 28 einen externen ersten Datensensor 40 aufweist, welcher mit dem internen ersten Datensensor 22 gekoppelt ist, und wobei ein jeweiliges Sicherheitssignal 26, 36 zusätzlich von dem externen ersten Datensensor 40 und/oder dem externen zweiten Datensensor 38 erzeugbar ist.

Insbesondere zeigt somit die FIG 1 ebenfalls, dass der erste externe Datensensor 40 und der externe zweite Datensensor 38 über eine Kommunikationsverbindung 42 miteinander gekoppelt sind. Des Weiteren kann die erste elektronische Recheneinrichtung 18 und die zweite elektronische Recheneinrichtung 28 über eine weitere Kommunikationsverbindung 44 miteinander gekoppelt sein. Ferner zeigt die FIG 1, dass der externe zweite Datensensor 38 über einen ersten Kommunikationslink 46 mit dem internen zweiten Datensensor 32 gekoppelt ist und der externe erste Datensensor 40 mit dem internen ersten Datensensor 22 über einen weiteren Kommunikationslink 48 gekoppelt ist. Ferner sind Verbindungen 50 und 52 gezeigt, welche die jeweiligen internen Datensensoren 22, 32 mit den externen Datensensoren 38, 40 verbinden.

Im folgenden Ausführungsbeispiel kann insbesondere vorgesehen sein, dass die erste elektronische Recheneinrichtung 18 als primäre Steuerungseinrichtung für die Maschine 12 ausgebildet ist.

Der interne erste Datensensor 22 ist dabei insbesondere zum Überwachen des Betriebs der ersten elektronischen Recheneinrichtung 18 ausgebildet und/oder der interne zweite Datensensor 32 ist zum Überwachen des Betriebs der zweiten elektronischen Recheneinrichtung 28 ausgebildet. Des Weiteren kann der externe zweite Datensensor 38 zum Überwachen des Betriebs der ersten elektronischen Recheneinrichtung 18 ausgebildet sein und/oder der externe erste Datensensor 40 zum Überwachen des Betriebs der zweiten elektronischen Recheneinrichtung 28 ausgebildet sein.

Ferner kann vorgesehen sein, dass die Datensensoren 22, 32, 38, 40 zum Durchführen eines Testprogramms für die erste elektronische Recheneinrichtung 18 und/oder die zweite elektronische Recheneinrichtung 28 ausgebildet sind.

Insbesondere zeigt somit die FIG 1, dass eine Steuerfunktion 24, 34 jeweils von der ersten elektronischen Recheneinrichtung 18 und/oder von der zweiten elektronischen Recheneinrichtung 28 eingesetzt und ausgeführt werden. Da es sich dabei um zwei Instanzen der Steuerfunktion 24, 34 handelt, verhalten sich die erste elektronische Recheneinrichtung 18 und die zweite elektronische Recheneinrichtung 28 im Wesentlichen identisch, wenn alles andere unverändert bleibt.

Dabei kann beispielsweise die erste elektronische Recheneinrichtung 18 als primäre Kontrollinstanz ausgebildet sein. Die primäre Kontrollinstanz steuert dabei die Umgebung der Steuerfunktionen 24, 34 über eine entsprechende Aktorverbindung, die aktiv ist, zur Maschine. Die sekundäre Kontrollinstanz, vorliegend insbesondere die zweite elektronische Recheneinrichtung 28, ist dabei inaktiv. Es kann jeweils nur die jeweilige Verbindung des Primärteils aktiv sein. Unter speziellen Konditionen kann die entsprechende Verbindung des Primärbauteils inaktiv werden.

Für die Implementierung der elektronischen Recheneinrichtungen 18, 28 können zwei vergleichsweise günstige Standard-Industrie-PCs mit handelsüblicher Hardware und Software verwendet werden.

Die externen Datensensoren 38, 40 sind mit den jeweiligen internen Datensensoren 22, 32 verschränkt. Diese Datensensoren 22, 32, 38, 40 bilden wiederum das sogenannte Rückgrat eines verteilten Sicherheitsmonitors, wie dies insbesondere der Schaltungsanordnung 16 entspricht, mit den zwei redundanten Notverbindungen zur Sicherheitseinrichtung 14.

Die Schaltungsanordnung 16 erkennt und behandelt ein Ausfallen oder fehlerhafte Prozesse, Prozesskommunikationsverbindungen und Rechenknoten. Die Schaltungsanordnung 16 weist dabei redundante und unabhängige interne Datensensoren 22, 32 auf, die insbesondere in den elektronischen Recheneinrichtungen 18, 28 eingebaut sind und dort ausgeführt werden. Ferner weist die Schaltungsanordnung 16 redundante und unabhängige externe Datensensoren 38, 40 auf, die als separate, autonome, reine Sensorprozesse ausgeführt werden. Ferner können beispielsweise der externen zweite Datensensor 38 mit dem internen ersten Datensensor 22, und der externe erste Datensensor 40 mit dem internen zweiten Datensensor 32 verschränkt sein, insbesondere lateral, also auf derselben elektronischen Recheneinrichtung 18, 28 sowie auch zwischen den verschiedenen unabhängigen elektronischen Recheneinrichtungen 18, 28. Die Datensensoren 22, 32, 38, 40 sind dabei insbesondere derart miteinander verschränkt, um deren Überwachungsfunktion auszutauschen und sich gegenseitig zu überwachen, zum Beispiel um die Verfügbarkeit und den Gesundheitszustand des Peers zu überwachen und zu vergleichen, ähnlich wie auch die elektronischen Recheneinrichtungen 18, 28 sich gegenseitig überwachen. Ferner sind die entsprechenden Notverbindungen zur Sicherheitseinrichtung 14 vorgesehen.

Die internen Datensensoren 22, 32 überwachen den Betrieb der elektronischen Recheneinrichtungen 18, 28, indem sie Datenelemente, die sich auf die Steuerfunktionsinstanzen oder ihre Betriebsmittel beziehen, überwachen und von Fall zu Fall ändern. Die internen Datensensoren 22, 32 implementieren dabei insbesondere Testprogramme. Ferner können auch die externen Datensensoren 38, 40 Testprogramme implementieren, jedoch in dedizierten, unabhängigen Überwachungsprozessen auf verschiedenen elektronischen Recheneinrichtungen 18, 28. Der externe erste Datensensor 40 überwacht dabei wiederum die erste Steuerfunktion 24 und der externe zweite Datensensor 38 überwacht die zweite Steuerfunktion 34. Diese Überwachung erfolgt wiederum über die entsprechenden internen Datensensoren 22, 32. Mit anderen Worten erfolgt die Überwachung der ersten Steuerfunktion 24 mittels des externen ersten Datensensors 40 über den ersten internen Datensensor 22 und die Überwachung der zweiten Steuerfunktion 34 erfolgt wiederum mittels des externen ersten Datensensors 38 über den internen zweiten Datensensor 32.

Die externen Datensensoren 38, 40 vergleichen wiederum ihre Systemansichten, um beispielsweise bei Systeminkonsistenzen oder Komponentenausfällen durch ausfallende Datensensoren 22, 32, 38, 40 zu erkennen und entsprechende Gegenmaßnahmen einzuleiten. Im Falle eines drohenden nicht wieder gut zu machenden Schadens, wenn beispielsweise die primäre Steuerungsfunktion nicht ordnungsgemäß reagiert, kann die Schaltungsanordnung 16 versuchen, auf die sekundäre Steuerungsfunktion, mit anderen Worten auf die zweite elektronische Recheneinrichtung 28, umzuschalten, oder als letztes Mittel auch die Sicherheitseinrichtung 14 anzusteuern, und beispielsweise einen Notstopp initiieren.

Die Schaltungsanordnung 16 muss dabei insbesondere voll funktionsfähig sein, um den Lebenszyklus der sicherheitsrelevanten Steuerungsinstanz vollständig abzudecken, einschließlich entsprechender Upgrades und Downgrades. Im Normalfall überdauert die Schaltungsanordnung 16 die Steuerfunktionsinstanzen, das heißt die Schaltungsanordnung 16 ist vor und nach den Steuerfunktionsinstanzen betriebsbereit. Dies kann beispielsweise nachfolgend für Startsequenzen veranschaulicht werden.

Die Startsequenz einer einfach abgedeckten Steuerfunktion 24, 34, das heißt einer Steuerfunktion 24 mit der ersten elektronischen Recheneinrichtung 18, ist, dass der externe erste Datensensor 40 mit aktivierter Notverbindung zuerst gestartet wird. Dann startet der interne erste Datensensor 32 bei aktiver Notverbindung und bei aktivierter seitlicher Sensor-Datenverbindung, mit anderen Worten den Verbindungen 52 und 48. Der interne erste Datensensor 22 meldet sich dann bei dem bereits laufenden externen zweiten Datensensor 40 an. Die Systemsteuerungslogik in der ersten Steuerfunktion 24 startet nun mit aktivierter weiterer Kommunikationsverbindung 44 zwischen den beiden elektronischen Recheneinrichtung 18 und 28.

Die Startsequenz einer doppelt abgedeckten, redundanten Steuerfunktion, das heißt einer Steuerfunktion mit zwei Steuerfunktionsinstanzen ist wie folgt: Die beiden externen Datensensoren 38, 40 werden mit der entsprechenden Notfunktion gestartet. Im Anschluss daran erfolgt das Starten der internen Datensensoren 22, 32 sowie deren entsprechenden Verbindungen. Die internen Datensensoren 22, 32 melden sich bei den bereits externen Datensensoren 38, 40 an. Die Systemsteuerungslogik beginnt, insbesondere aktiv die erste Steuerfunktion 24 auf die Maschine 12 anzuwenden. Die Notfallverbindungen von den Datensensoren 22, 32, 38, 40, die direkt der primären Kontrollinstanz zugeordnet sind, werden aktiviert.

In jedem Systemzyklus müssen die kritischen Daten, die in redundanten Steuerungsinstanzen abgefragt werden, das heißt die Daten, die in Probepunkten gekapselt sind, das heißt die Daten, die in den Datensensoren 22, 32, 38, 40 gekapselt sind und von den Datensensoren 22, 32, 38, 40 in jedem Systemzyklus überprüft und verglichen werden, gleich sein. Wenn kritische Daten nach einer bestimmten Zeit, die von dem Steuerungssystem, der Steuerungsfunktion 24, 34 und der sich ändernden Systemumgebung abhängt, nicht übereinstimmen, dann betätigt einer der Datensensoren 22, 32, 38, 40 beispielsweise die Sicherheitseinrichtung 14 in dieser Reihenfolge: Primärer Datensensor vor sekundärer Datensensor, interner Datensensor 22, 32 vor externem Datensensor 38, 40. Im Falle eines Problems der Schaltungsanordnung 16 kann die Steuerungsfunktion anhalten oder in einen verschlechterten Betriebsmodus übergehen.

Bei dem in der FIG 1 dargestellten Aufbau wird ein einzelner Fehlerpunkt wie folgt behandelt. Sollte beispielsweise die zweite Steuerfunktion 34 ausfallen, läuft immer noch die erste Steuerfunktion 24, einschließlich des internen ersten Datensensors 22 und des externen ersten Datensensors 40.

Fällt die zweite elektronische Recheneinrichtung 28 mit der zweiten Steuerfunktion 34 und dem externen ersten Datensensor 40 aus, so läuft noch die erste elektronische Recheneinrichtung 18 mit der ersten Steuerfunktion 24. Der sekundäre, im Bereitschaftszustand befindliche externe zweite Datensensor 38 wird zuvor zum primären externen Datensensor.

Wenn die primäre Steuerfunktion 24 ausfällt, wird insbesondere im Hot-Stand by-Modus die zweite elektronische Recheneinrichtung 28 zugeschaltet und sofort zum primären Steuerungskreis. Der zugehörige externe zweite Datensensor 38 wird sofort zum primären externen Datensensor. Die entsprechenden Funktionen für die Sicherheitseinrichtung 14 sind weiterhin verfügbar.

Wenn die erste elektronische Recheneinrichtung 18 mit der ersten Steuerfunktion 24 und dem externen zweiten Datensensor 38 ausfällt, dann läuft weiterhin noch die zweite elektronische Recheneinrichtung 28 mit der zweiten Steuerfunktion 34, die sofort zur primären Kontrollinstanz wird. Die entsprechenden Notfallinstanzen für die Sicherheitseinrichtung 14 sind weiterhin verfügbar.

Fällt einer der externen Datensensoren 38, 40 aus, gibt es immer noch die gleichrangigen externen Datensensoren 38, 40, die entweder der primäre ist, beispielsweise der externe zweite Datensensor 40 beim Ausfall des externen ersten Datensensors 38 oder umgekehrt, wobei sofort der noch verfügbare zum primären Datensensor wird.

Wenn alle redundanten Verbindungen für die Steuersignale 20, 30 oder eine der redundanten Notverbindungen ausfällt, funktioniert die entsprechende Gegenverbindung noch. Diese Ausfälle können wie Ausfälle der Prozesse, beispielsweise Steuerfunktionsinstanzen oder externe Datensensoren 38, 40, behandelt werden, die diese Verbindungen kontrollieren.

Fällt eine der Sensordatenverbindungen aus, erreichen die Sensordaten ihr Ziel über eine redundante Kommunikationsverbindung. Alternativ können die Sensordaten über eine andere Kommunikationsverbindung umgeleitet werden, vorausgesetzt, die für die Sensordatenkommunikation gesperrten Kommunikationsressourcen sowie die Datenlaufzeit sind ausreichend.

Sollte beispielsweise der interne erste Datensensor 22 ein fatales Programm auf der ersten Steuerfunktion 24 feststellen, kann der interne erste Datensensor 22 einen entsprechenden Notstopp initiieren. Wenn der externe erste Datensensor 40 ein fatales Programm in der ersten Steuerfunktion 24 feststellt, das aus globaler Sicht betrachtet untragbar ist, zum Beispiel unter Berücksichtigung des Zustands von der zweiten Steuerfunktion 24, der Betriebsbedingungen und der Gesundheit der entsprechenden elektronischen Recheneinrichtung 28, so kann der externe zweite Datensensor 40 eine Notfunktion auslösen.

Primäre Instanzen reagieren vor sekundären Instanzen und interne Datensensoren 22, 32 können vor externen Datensensoren 38, 40 reagieren.

Nach einem kritischen Ausfall läuft die entsprechende Steuerungsfunktion für einen bestimmten Zeitraum im degradierten Betriebsmodus. Eine sicherheitsrelevante Steuerungsfunktion im degradierten Modus sollte nicht aufgerüstet oder heruntergestuft werden.

Die externen Datensensoren 38, 40 und die internen Datensensoren 22, 32 führen ein oder mehrere Testprogramme aus und verwenden dabei die Betriebsmittel, die ausschließlich für Datentestoperationen verfügbar und gesperrt sind. Ein Prüfprogramm ist dabei wiederum ein Testprogramm, welches auch als Testplan bezeichnet werden kann, das statisch vor der Ausführung des Steuerungssystems, oder dynamisch während der Laufzeit des Steuerungssystems, verknüpft werden kann. Prüfprogramme arbeiten an Prüfpunkten auf der Anwendungsebene und/oder auf der Systemebene, um wichtige Steuerungsfunktionen zu prüfen und zu vergleichen und um Leistungsindikatoren, beispielsweise den Gesundheitszustand, zu ermitteln.

FIG 2 zeigt ein weiteres schematisches Blockschaltbild einer Ausführungsform eines Maschinensystems 10, insbesondere der Schaltungsanordnung 16. Vorliegend ist insbesondere gezeigt, dass im Notfall die Schaltungsanordnung 16 eine weitere Möglichkeit hat einzugreifen. Beispielsweise im Auftrag eines der internen Datensensoren 22, 32 kann einer der internen Datensensoren 22, 32 Steuerungsausgänge für eine bestimmte Zeitspanne abschalten. Zu diesem Zweck sind Steuerungsfunktionsausgänge an den entsprechenden Datensensoren 22, 32 gekapselt, zum Beispiel ist die erste Steuerfunktion 24 der Kommunikationsport zur Maschine 12.

Im vorliegenden Ausführungsbeispiel kann beispielsweise vorgesehen sein, dass die Schaltungsanordnung 16 die Antriebsverbindung des Primärteils von aktiv auf inaktiv schaltet, wenn beispielsweise ein Fehler erkannt wird. Im Normalbetrieb ist wiederum beispielsweise die erste Steuerfunktion 24 aktiviert. Im Notfall, und wenn alles andere fehlschlägt, kann der interne Datensensor 22 einen entsprechenden Messpunkt deaktivieren, wenn er von einem Messprogramm dazu angewiesen wird.

## Patentansprüche

1. Schaltungsanordnung (16) für eine Steuerung einer Maschine (12), mit zumindest einer ersten elektronischen Recheneinrichtung (18) zum Erzeugen von einem ersten Steuersignal (20) für die Maschine (12), wobei die erste elektronische Recheneinrichtung (18) einen internen ersten Datensensor (22) zum Erzeugen eines ersten Sicherheitssignals (26) für eine Sicherheitseinrichtung (14) für die Maschine (12) aufweist, **dadurch gekennzeichnet, dass**
die Schaltungsanordnung (16) eine zweite elektronische Recheneinrichtung (28) aufweist, welche zum Erzeugen von einem zweiten Steuersignal (30) für die Maschine (12) ausgebildet ist, wobei die zweite elektronische Recheneinrichtung (28) einen internen zweiten Datensensor (32) zum Erzeugen eines zweiten Sicherheitssignals (36) für die Sicherheitseinrichtung (14) aufweist, wobei die erste elektronische Recheneinrichtung (18) einen externen zweiten Datensensor (38) aufweist, welcher mit dem internen zweiten Datensensor (32) gekoppelt ist, wobei die zweite elektronische Recheneinrichtung (28) einen externen ersten Datensensor (40) aufweist, welcher mit dem internen ersten Datensensor (22) gekoppelt ist, und wobei ein jeweiliges Sicherheitssignal (26, 36) zusätzlich von dem externen ersten Datensensor (40) und/oder dem externen zweiten Datensensor (38) erzeugbar ist.

2. Schaltungsanordnung (16) nach Anspruch 1, **dadurch gekennzeichnet, dass**
der externe erste Datensensor (40) und der externe zweite Datensensor (38) über eine Kommunikationsverbindung (42) miteinander gekoppelt sind.

3. Schaltungsanordnung (16) nach Anspruch 1 oder 2, **dadurch gekennzeichnet, dass**
die erste elektronische Recheneinrichtung (18) und die zweite elektronische Recheneinrichtung (28) über eine weitere Kommunikationsverbindung (44) miteinander gekoppelt sind.

4. Schaltungsanordnung (16) nach einem der vorhergehenden Ansprüche, **dadurch gekennzeichnet, dass**
die erste elektronische Recheneinrichtung (18) als primäre Steuerungseinrichtung für die Maschine (12) ausgebildet ist.

5. Schaltungsanordnung (16) nach einem der vorhergehenden Ansprüche, **dadurch gekennzeichnet, dass**
der interne erste Datensensor (22) mit dem externen zweiten Datensensor (38) gekoppelt ist und/oder der interne zweite Datensensor (32) mit dem externen ersten Datensensor (40) gekoppelt ist.

6. Schaltungsanordnung (16) nach einem der vorhergehenden Ansprüche, **dadurch gekennzeichnet, dass**
der interne erste Datensensor (22) zum Überwachen des Betriebs der ersten elektronischen Recheneinrichtung (18) ausgebildet ist und/oder der interne zweite Datensensor (32) zum Überwachen des Betriebs der zweiten elektronischen Recheneinrichtung (28) ausgebildet ist.

7. Schaltungsanordnung (16) nach einem der vorhergehenden Ansprüche, **dadurch gekennzeichnet, dass**
der externe zweite Datensensor (38) zum Überwachen des Betriebs der ersten elektronischen Recheneinrichtung (18) ausgebildet ist und/oder der externe erste Datensensor (40) zum Überwachen des Betriebs der zweiten elektronischen Recheneinrichtung (28) ausgebildet ist.

8. Schaltungsanordnung (16) nach einem der vorhergehenden Ansprüche, **dadurch gekennzeichnet, dass**
die Datensensoren (22, 32, 38, 40) zum Durchführen eines Testprogramms für die erste elektronische Recheneinrichtung (18) und/oder die zweite elektronische Recheneinrichtung (28) ausgebildet sind.

9. Maschinensystem (10) mit zumindest einer Maschine (12), einer Sicherheitseinrichtung (14) und mit einer Schaltungsanordnung (16) zum Steuern der Maschine (12) nach einem der Ansprüche 1 bis 8.

10. Verfahren zum Erzeugen eines Steuersignals (20, 30) für ein Maschinensystem (10) nach Anspruch 9, mit den Schritten:
- Erfassen einer Fehlfunktion der ersten elektronischen Recheneinrichtung (18) mittels zumindest einem der Datensensoren (22, 32, 38, 40);
- Erzeugen eines Steuersignals (30) für die Maschine (12) mittels der zweiten elektronischen Recheneinrichtung (28); oder
- Initiieren einer Notsteuerung der Maschine (12) mittels der Sicherheitseinrichtung (14).

11. Verfahren nach Anspruch 10 **dadurch gekennzeichnet, dass** die Notsteuerung von dem internen ersten Datensensor (22) oder dem externen ersten Datensensor (40) oder dem internen zweiten Datensensor (32) oder dem externen zweiten Datensensor (38) initiiert wird.

12. Verfahren nach Anspruch 10 oder 11, **dadurch gekennzeichnet, dass**
mittels des internen ersten Datensensors (22) und/oder des externen ersten Datensensors (40) und/oder des internen zweiten Datensensors (32) und/oder des externen zweiten Datensensor (38) ein Testprogramm, insbesondere kontinuierlich, an die erste elektronische Recheneinrichtung (18) und/oder die zweite elektronische Recheneinrichtung (28) übertragen wird.

13. Verfahren nach einem der Ansprüche 10 bis 12, **dadurch gekennzeichnet, dass**
die erste elektronische Recheneinrichtung (18) und die zweite elektronische Recheneinrichtung (28) für einen redundanten Betrieb der Maschine (12) bereitgestellt werden.

14. Computerprogrammprodukt mit Programmcodemitteln, welche zumindest eine elektronische Recheneinrichtung (18, 28) dazu veranlasst, wenn die Programmcodemittel von der zumindest einen elektronischen Recheneinrichtung (18, 28) abgearbeitet werden, ein Verfahren nach einem der Ansprüche 10 bis 13 durchzuführen.

15. Computerlesbares Speichermedium mit zumindest einem Computerprogrammprodukt nach Anspruch 14.
